# EUROPÄISCHE PATENTSCHRIFT

(11) **EP 2 327 539 B1**
(45) Veröffentlichungstag und Bekanntmachung des Hinweises auf die Patenterteilung: **10.09.2014**
(21) Anmeldenummer: 10014815.4
(22) Anmeldetag: 22.11.2010
(51) Int. Cl.: B30B 1/26, F16H 3/66

(54) **Hubpresse oder Hubstanze mit schaltbarem Planetengetriebe**
Press or punching press with switchable planetary gear
Presse ou presse à estamper à engrenage planétaire commutable

(30) Priorität: 30.11.2009 AT 18972009
(43) Veröffentlichungstag der Anmeldung: 01.06.2011
(73) Patentinhaber: Andritz Technology and Asset Management GmbH, 8045 Graz (AT)
(72) Erfinder: Brösamle, Rudi, 75177 Pforzheim (DE); Goutier, Ingo, 75015 Bretten (DE); Groß, Steffen, 75015 Bretten (DE)
(74) Vertreter: Tschinder, Thomas

(56) Entgegenhaltungen:
- EP-A2- 2 011 999
- DE-A1- 4 309 785
- JP-A- 2001 349 394
- US-A- 4 666 172

## Beschreibung

Die Erfindung betrifft eine Hubpresse oder Hubstanze, z.B. in Form einer Exzenterpresse oder Exzenterstanze, mit einem Pressenrahmen, einer Antriebswelle, einer Abtriebswelle, welche z.B. als Exzenterwelle ausgebildet ist, einem Planetengetriebe, das zwischen die Abtriebswelle und die Antriebswelle geschaltet ist, und einem mit der Abtriebswelle verbundenen Hubstempel.

Eine derartige Presse ist z.B. aus der DE 43 09 785 A1 bekannt, wobei das dortige Planetengetriebe in zwei Schaltstufen schaltbar ist, indem ein Hohlrad zum Erzielen eines Übersetzungsverhältnisses von 1:1 in einer ersten Schaltstufe mit dem Planetenträger und zum Erzielen einer Untersetzung andererseits in einer zweiten Schaltstufe mit dem Gehäuse drehfest kuppelbar ist.

Aus der DE-OS-2 123 330 ist eine Presse mit einem in zwei Schaltstufen schaltbaren Planetengetriebe bekannt, wobei zum Erzielen eines ersten Untersetzungsverhältnisses in einer ersten Schaltstufe ein erstes Hohlrad mittels einer ersten Lamellenkupplung drehfest mit dem Gehäuse verbunden ist, und wobei zum Erzielen eines zweiten Untersetzungsverhältnisses in einer zweiten Schaltstufe ein zweites Hohlrad mittels einer zweiten Lamellenkupplung drehfest mit dem Gehäuse verbunden ist.

Die JP 2001-349394 A offenbart einen Pressenantrieb, bei dem von einer Antriebswelle, auf der sich zwei Sonnenräder befinden, zwei Sätze von Planetenrädern, die in einem rahmenfesten Gehäuse fixiert sind, angetrieben werden. Die Planetenräder treiben axial verschiebbare Hohlräder an, die mit der Abtriebswelle verbunden sind.

Durch die Erfindung gemäß Anspruch 1 wird eine Hubpresse oder Hubstanze geschaffen, welche einfach aufgebaut und damit kostengünstig realisierbar ist und welche einfach für unterschiedliche Einsatzzwecke anpassbar ist.

Die Erfindung stellt hiernach eine Hubpresse oder Hubstanze bereit, mit einem Pressenrahmen, einer Antriebswelle, einer Abtriebswelle, einem Planetengetriebe, das zwischen die Antriebswelle und die Abtriebswelle geschaltet ist, und einem mit der Abtriebswelle verbundenen Hubstempel, wobei das Planetengetriebe aufweist: ein pressenrahmenfestes Getriebegehäuse, eine Sonnenwelle, die mit der Antriebswelle verbunden ist (zum Antreiben der Sonnenwelle) und die ein erstes und ein zweites Sonnenrad aufweist, die drehfest, z.B. einstückig, mit der Sonnenwelle verbunden sind, einen mit der Abtriebswelle verbundenen Planetenträger (zum Antreiben der Abtriebswelle) mit wenigstens einem ersten Planetenrad, das mit dem ersten Sonnenrad im Eingriff ist, und mit wenigstens einem zweiten Planetenrad, das mit dem zweiten Sonnenrad im Eingriff ist, eine Hohlradanordnung mit einem ersten Hohlrad und einem zweiten Hohlrad, die drehfest und axialverschiebbar am Getriebegehäuse angebracht sind, und eine Axialbewegungseinrichtung, mittels welcher das erste und das zweite Hohlrad axial verschiebbar sind, um zum Erzielen eines ersten Untersetzungsverhältnisses das erste Hohlrad mit dem wenigstens einen ersten Planetenrad und zum Erzielen eines zweiten Untersetzungsverhältnisses das zweite Hohlrad mit dem wenigstens einen zweiten Planetenrad selektiv in Eingriff zu bringen. Die Axialrichtung ist durch die Längsrichtung der Sonnenwelle definiert, wobei sich die Antriebswelle und die Abtriebswelle z.B. parallel, z.B. auch fluchtend, zur Sonnenwelle erstrecken und sich die Hohlradanordnung mit ihren beiden Hohlrädern koaxial zur Sonnenwelle erstreckt.

Das erste und das zweite Hohlrad können separat voneinander ausgebildet sein und gemeinsam oder selektiv verschiebbar vorgesehen sein, wobei im letzteren Falle die Axialbewegungseinrichtung eine dem jeweiligen Hohlrad zugeordnete Axialbewegungsvorrichtung zum selektiven Bewegen des jeweils zugeordneten Hohlrads aufweist.

Nach einer anderen Ausführungsform sind das erste Hohlrad und das zweite Hohlrad miteinander einstückig ausgebildet und damit gemeinsam axial verschiebbar. Hiernach gelangt beim Ineingriffbringen des einen der beiden Hohlräder mit dem jeweils zugeordneten, wenigstens einen Planetenrad das jeweilige andere Hohlrad automatisch außer Eingriff von dessen zugeordnetem, wenigstens einem Planetenrad. Die einstückige Hohlradanordnung stellt hierbei eine Hohlradeinheit bzw. einen Hohlradverbund dar und hat z.B. die Form einer Hülse mit z.B. kreisförmigem Umfang.

Das Planetengetriebe umfasst mit den beiden Hohlrädern entsprechend zwei Schaltstufen mit den jeweiligen beiden, voneinander verschiedenen Untersetzungsverhältnissen. Damit ist die Hubpresse bzw. Stanzpresse in einfacher Weise für zwei typische Anwendungen anpassbar. Derartige Anwendungen sind z.B. Tiefziehen, wobei eine langsame Pressstempelbewegung mit größerer Presskraft eine stärkere Untersetzung des Getriebes erfordert, und z.B. Ausstanzen von Teilen, wobei schnellere Stanzstempelbewegungen mit kleinerer Presskraft eine geringere Untersetzung erfordern. Ferner ist die Hubpresse bzw. Stanzpresse gemäß der Erfindung im Hinblick auf ihre konstruktive Auslegung einfacher an unterschiedliche Einsatzwecke anpassbar, weil zum Schalten der Schaltstufen keine Bremsen oder Reibkupplungen erforderlich sind, die angepasst an unterschiedlich starke Drehmoment-/Kraftanforderungen entsprechend groß zu dimensionieren wären. Bei der Erfindung kann die Kraftübertragung zwischen den bewegten Planetengetriebeelementen, stets durch Formschluss, wie z.B. Zahneingriff oder Keilverbindung oder ähnliches, erfolgen. Indem hiernach die Hohlradanordnung bzw. das jeweilige Hohlrad (erste und zweite Hohlrad) ebenfalls via Formschluss, d.h. zum Beispiel via Zahneingriff wie Keilwellenverbindung oder via Keilverbindung, drehfest am Getriebegehäuse gehalten sind, kann die Axialbewegungseinrichtung unabhängiger von den für die bewegten Getriebeteile zu erwartenden Lasten ausgelegt werden und damit vergleichsweise schwach dimensioniert werden, da die auf die Hohlräder ausgeübten Drehmomente von der Formschlussverbindung zwischen Hohlrad und Getriebegehäuse aufgenommen werden.

Die Abtriebswelle ist mit dem Hubstempel über einen Mechanismus verbunden, welcher die Drehbewegung der Abtriebswelle in eine (lineare) Hubbewegung für den Hubstempel umwandelt. Hierzu ist die Abtriebswelle nach einer Ausführungsform als Exzenterwelle ausgebildet; d.h. die Abtriebswelle ist über einen Exzentermechanismus mit dem Hubstempel verbunden. Die Abtriebswelle kann aber auch über einen Kniehebelmechanismus oder über einen Kurvenscheibenmechanismus mit dem Hubstempel verbunden sein.

Nach einer Ausführungsform hat die Hohlradanordnung eine Außenverzahnung, welche zur Herstellung der drehfesten Verbindung mit dem Getriebegehäuse im Eingriff mit einer Innenverzahnung des Getriebegehäuses steht. Hierbei kann bei einstückiger sowie auch bei getrennter Ausbildung des ersten und des zweiten Hohlrads, an dem ersten und an dem zweiten Hohlrad eine jeweilige Außenverzahnung ausgebildet sein. Bei einstückiger Ausbildung der beiden Hohlräder kann die Außenverzahnung an einem beliebigen Außenabschnitt der von den beiden Hohlrädern gebildeten Hohlradeinheit/Hohlradanordnung ausgebildet sein.

Die Axialbewegungseinrichtung kann eine Linearbewegungsvorrichtung sein. Ferner kann die Axialbewegungseinrichtung z.B. von einem Elektromotor angetrieben sein. Die Axialbewegungsvorrichtung kann ferner einen Exzenterantrieb aufweisen, mit zum Beispiel einem von einem Exzenterrad angetriebenem Pleuel, welches mit der Hohlradanordnung verbunden ist.

Nach einer Ausführungsform weist die Bewegungseinrichtung zum axialen Bewegen des ersten und des zweiten Hohlrades einen jeweiligen pneumatisch oder hydraulisch betriebenen Axialzylinder mit einem Zylinderraum, einem Zylinderkolben, der im Zylinderraum bewegbar ist, und einem mit dem Zylinderkolben verbundenen Zylinderstößel auf. Im Falle von voneinander getrenntem ersten und zweiten Hohlrad kann die Bewegungseinrichtung eine erste und eine zweite Bewegungsvorrichtung, die dem ersten und dem zweiten Hohlrad dann jeweils zugeordnet sind, aufweisen, wobei die jeweilige Bewegungsvorrichtung z.B. einen wie vorstehend beschriebenen Axialzylinder aufweist, wobei der jeweilige Zylinderstößel dann mit dem zugehörigen Hohlrad verbunden ist, um dieses mit der Axialbewegung des Zylinderstößels entsprechend axial mitzubewegen. Bei einstückiger Ausbildung der beiden Hohlräder genügt im Prinzip ein einziger solcher Axialzylinder, dessen Zylinderstößel entsprechend mit der Hohlradanordnung/Hohlradeinheit, d.h. mit den einstrückig ausgebildeten Hohlrädern, verbunden ist.

Nach einer Ausführungsform weist die Bewegungseinrichtung zum axialen Bewegen des ersten und des zweiten Hohlrades mehrere, zum Beispiel wenigstens drei oder vier, entlang des Umfangs der Hohlradanordnung angeordnete, pneumatisch oder hydraulisch betriebene Axialzylinder mit jeweils einem Zylinderraum, einem Zylinderkolben, der im Zylinderraum bewegbar ist, und einem mit dem Zylinderkolben verbunden Zylinderstößel auf. Hierbei gilt erneut, dass bei getrennter Ausbildung von erstem und zweitem Hohlrad pro erstem und zweitem Hohlrad jeweils eine solche Mehrzahl von Axialzylindern und damit von Bewegungsvorrichtungen angeordnet sein kann und dass bei einstückiger Ausbildung von erstem und zweitem Hohlrad die besagte Mehrzahl von Bewegungsvorrichtungen bzw. Axialzylindern alleinig zum Bewegen des Verbunds der beiden Hohlräder herangezogen werden kann. Die Bewegungsvorrichtungen bzw. die Axialzylinder sind z.B. in regelmäßigen Winkelabständen voneinander entlang des Umfangs der Hohlradanordnung angeordnet.

Nach einer Ausführungsform ist der Zylinderraum des jeweiligen Axialzylinders in einer getriebegehäusefesten Hülse ausgeformt, wobei z.B. die Hohlradanordnung von der Hülse zumindest teilweise überlappend umgeben ist. D.h. das erste und das zweite Hohlrad sind radial außen zumindest teilweise von der Hülse umgeben.

Der Hub des Stößels des jeweiligen Axialzylinders kann sich z.B. in die von der Antriebswelle abgewandte und damit in die der Abtriebswelle zugewandte Axialrichtung erstrecken. Hierdurch kann z.B. ein auf der Antriebswelle angeordnetes Schwungrad axial näher am Planetengetriebe angeordnet werden.

Nach einer Ausführungsform weist die Bewegungseinrichtung eine Stirnplatte auf, welche an einer Stirnseite der Hohlradanordnung mit der Hohlradanordnung, z.B. mit der Hohlradeinheit bzw. dem Hohlradverbund, (fest) verbunden ist und an welcher ein axial bewegbares Axialantriebsteil der Bewegungseinrichtung angebracht ist, sodass das jeweilige Hohlrad mit der Axialbewegung des Axialantriebsteils axial mitbewegbar ist. Im Falle dass die Bewegungseinrichtung mehrere Bewegungsvorrichtungen hat, kann jede Bewegungsvorrichtung ein derartiges Axialbewegungsteil aufweisen. Das jeweilige Axialbewegungssteil kann z.B. von dem Stößel des jeweiligen Axialzylinders gebildet sein, wobei der Stößel z.B. an seinem freien Endabschnitt mit der Stirnplatte verbunden ist.

Das Axialbewegungsteil kann aber auch in Form des oben erwähnten Pleuels eines Exzenterantriebs oder in Form eines Schlittens eines Linearantriebs ausgebildet sein.

Die Stirnplatte ist zum Beispiel an der von der Antriebswelle abgewandten und damit an der der Abtriebswelle zugewandten Stirnseite der Hohlradanordnung angebracht.

Die Erfindung wird im Folgenden anhand von Ausführungsbeispielen mit Bezugnahme auf die Zeichnungen erläutert. In den Zeichnungen zeigen:
Figur 1 schematisch eine Hubpresse/Hubstanze mit einem Planetengetriebe gemäß einer Ausführungsform der Erfindung.
Figur 2 schematisch das Planetengetriebe der Hubpresse/Hubstanze von Figur 1 gemäß einer Ausführungsform der Erfindung.

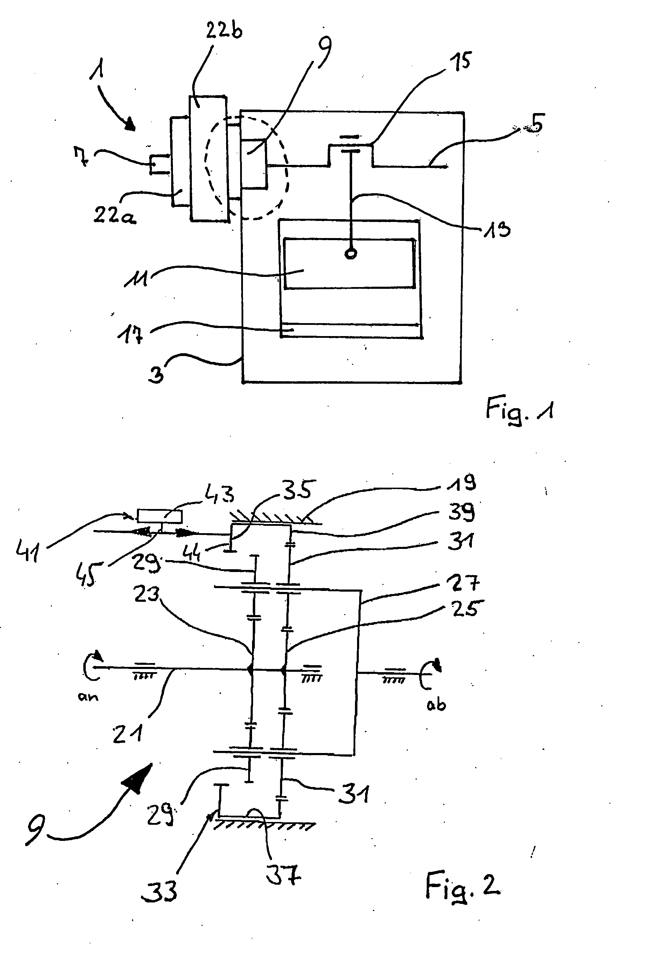

In Figur 1 ist schematisch eine Ausführungsform einer Hubpresse oder Hubstanze 1 dargestellt, welche hier als Exzenterpresse oder Exzenterstanze ausgebildet ist und welche aufweist: einen Pressen- oder Pressenmaschinenrahmen 3, eine als Exzenterwelle ausgebildete Abtriebswelle 5, eine Antriebswelle 7 und ein Planetengetriebe 9, das zwischen die Abtriebswelle 5 und die Antriebswelle 7 geschaltet ist. Das Planetengetriebe 9 (in Figur 1 eingerahmt via gestrichelte Linie) ist in Figur 2 schematisch mit seinen Detailkomponenten dargestellt.

Die Hubpresse/Hubstanze 1 weist ferner einen Hubstempel 11 auf, der über ein Verbindungsstück 13, z.B. eine Pleuelstange, mit einer Exzentrizität 15, z.B. einer Nocke, der Abtriebswelle 5 verbunden ist, so dass der Hubstempel 11 bei Drehung der Abtriebswelle 5 relativ zu einem Pressentisch 17 bzw. einer Pressenmatrize der Hubpresse/Hubstanze 1 eine entsprechende Hubbewegung durchführt.

Das Planetengetriebe 9 weist auf: ein fest mit dem Pressenrahmen 3 verbundenes Getriebegehäuse 19, eine im Getriebegehäuse 19 drehbar gelagerte, z.B. über Wälzlager gelagerte, Sonnenwelle 21, die mit der Antriebswelle 7 verbunden ist. Zwischen der Antriebswelle 7 und der Sonnenwelle 21 kann eine Kupplung 22a vorgesehen sein; auf der Sonnenwelle 21 kann ferner ein Schwungrad 22b mit der Sonnenwelle 21 mitdrehbar vorgesehen sein. Das Planetengetriebe 9 hat ferner einstückig damit ausgebildet ein erstes und ein zweites Sonnenrad 23, 25, die damit drehfest mit der Sonnenwelle 21 verbunden sind, einen im Getriebegehäuse drehbar abgestützten Planetenträger 27 mit mehreren ersten Planetenrädern 29, die stets mit dem ersten Sonnenrad 23 kämmen bzw. stets mit diesem im (Zahn-)Eingriff sind, und mit mehreren zweiten Planetenrädern 31, die stets mit dem zweiten Sonnenrad 25 kämmen bzw. stets mit diesem im (Zahn-)Eingriff sind, eine Hohlradanordnung 33 mit einem ersten Hohlrad 35 und einem einstückig damit zu einer Hohlradeinheit bzw. zu einem Hohlradverbund 37 ausgebildeten zweiten Hohlrad 39, die drehfest aber axialverschiebbar am Getriebegehäuse 19 angebracht sind, und einer Axialbewegungseinrichtung 41, mittels welcher das erste und das zweite Hohlrad 35, 39 gemeinsam relativ zum Getriebegehäuse 19 axial verschiebbar sind, um zum Erzielen eines ersten Untersetzungsverhältnisses (erste Schaltstufe) das erste Hohlrad 35 mit den ersten Planetenrädern 29 und zum Erzielen eines zweiten Untersetzungsverhältnisses (zweite Schaltstufe) das zweite Hohlrad 39 mit den zweiten Planetenrädern 31 selektiv in (Zahn)Eingriff zu bringen.

Die Axialbewegungseinrichtung 41 weist drei (nur eine ist in Figur 2 dargestellt) Axialbewegungsvorrichtungen 43 auf, die in regelmäßigen Winkelabständen zueinander entlang des Umfangs der Hohlradanordnung 33 an deren einen Stirnseite 44 (abgewandt von der Abtriebswelle 5) angeordnet sind. Die jeweilige Axialbewegungsvorrichtung 43 weist ein axial bewegbares, z.B. pneumatisch, hydraulisch oder elektrisch bewegbares, Axialantriebsteil 45 auf, welches an der einen Stirnseite 44 der Hohlradeinheit 37 befestigt ist, z.B. an einer an dieser Stirnseite 44 angebrachten Stirnplatte (nicht dargestellt). Nach einer anderen Ausführungsform ist die Bewegungseinrichtung 45 und damit die jeweilige Bewegungsvorrichtung 43 auf der der Abtriebswelle 5 zugewandten Seite angeordnet, wobei das Axialantriebsteil 45 dann z.B. auf der der Stirnseite 44 entgegen gesetzten Stirnseite angreift bzw. befestigt ist, z.B. an einer an dieser Stirnseite angebrachten Stirnplatte (nicht dargestellt). Hierdurch ist auf der Antriebsseite des Getriebes mehr Platz für z.B. die Anordnung des Schwungrads 22b und der Kupplung 22a. Das Axialantriebsteil 45 kann z.B. ein Stößel bzw. eine Kolbenstange eines Pneumatik- oder Hydraulikzylinders sein. Bei Anordnung des jeweiligen (Axial-)Zylinders auf der der Abtriebswelle 5 zugewandten Stirnseite der Hohlradanordnung 33 erstreckt sich der freie Endabschnitt des Stößels (= vom Zylinderraum wegweisender Stößelendsschnitt) z.B. in Richtung zu der Abtriebswelle 5; d.h. der Stößel/die Kolbenstange fährt in Richtung zu der Abtriebswelle 5 aus und in Richtung der Antriebswelle 7 ein.

Der Zylinder kann mit seinem Zylinderraum axial verlaufend in einer (nicht dargestellten) getriebegehäusefesten Hülse angeordnet sein, sodass sich der Stößel mit seiner Längsrichtung entsprechend axial erstreckt. Die Hülse ist z.B. um die Hohlradanordnung 33 herum verlaufend angeordnet.

Das Planetengetriebe 9 bzw. die Axialbewegungseinrichtung 43 ist mit einer nicht dargestellten Steuereinrichtung verbunden, welche die Axialbewegungseinrichtung 43 zum axialen Bewegen der Hohlradanordnung 33 und damit zum Schalten des Planetengetriebes 9 zwischen seinen beiden Untersetzungsverhältnissen ansteuert.

## Patentansprüche

1. Hubpresse oder Hubstanze (1) mit einem Pressenrahmen (3), einer Antriebswelle (7), einer Abtriebswelle (5), einem Planetengetriebe (9), das zwischen die Antriebswelle (7) und die Abtriebswelle (5) geschaltet ist, und einem mit der Abtriebswelle (5) verbundenen Hubstempel (11), wobei das Planetengetriebe (9) ein pressenrahmenfestes Getriebegehäuse (19), eine Sonnenwelle (21), die mit der Antriebswelle (7) verbunden ist, einen mit der Abtriebswelle (5) verbundenen Planetenträger (27) und eine Hohlradanordnung (33) aufweist, wobei die Sonnenwelle (21) ein erstes und ein zweites Sonnenrad (23, 25) aufweist, die drehfest mit der Sonnenwelle (21) verbunden sind, und wobei der Planetenträger (27) ein erstes Planetenrad (29), das mit dem ersten Sonnenrad (23) im Eingriff ist, und ein zweites Planetenrad (31), das mit dem zweiten Sonnenrad (25) im Eingriff ist, aufweist, wobei die Hohlradanordnung (33) ein erstes Hohlrad (35) und ein zweites Hohlrad (39) umfasst, die drehfest und axialverschiebbar am Getriebegehäuse (19) angebracht sind, und wobei eine Axialbewegungseinrichtung (43) vorgesehen ist, mittels welcher das erste und das zweite Hohlrad (35, 39) axial verschiebbar sind, um zum Erzielen eines ersten Untersetzungsverhältnisses das erste Hohlrad (35) mit dem ersten Planetenrad (29) und zum Erzielen eines zweiten Untersetzungsverhältnisses das zweite Hohlrad (39) mit dem zweiten Planetenrad (31) selektiv in Eingriff zu bringen.

2. Hubpresse oder Hubstanze (1) gemäß Anspruch 1, wobei das erste Hohlrad (35) und das zweite Hohlrad (39) miteinander einstückig ausgebildet sind.

3. Hubpresse oder Hubstanze (1) gemäß Anspruch 1 oder 2, wobei die Hohlradanordnung (33) eine Außenverzahnung aufweist, welche zur Herstellung der drehfesten Verbindung mit dem Getriebegehäuse (19) im Eingriff mit einer Innenverzahnung des Getriebegehäuses (19) steht.

4. Hubpresse oder Hubstanze (1) gemäß einem der vorangehenden Ansprüche, wobei die Axialbewegungseinrichtung (43) zum axialen Bewegen des ersten und des zweiten Hohlrades (35, 39) einen jeweiligen pneumatisch oder hydraulisch betriebenen Axialzylinder mit einem Zylinderraum, einem Zylinderkolben, der im Zylinderraum bewegbar ist, und einem mit dem Zylinderkolben verbundenen Zylinderstößel aufweist.

5. Hubpresse oder Hubstanze (1) gemäß Anspruch 4, wobei die Axialbewegungseinrichtung (43) zum axialen Bewegen des ersten und des zweiten Hohlrades (35, 39) mehrere, zum Beispiel wenigstens drei oder vier, entlang des Umfangs der Hohlradanordnung (33) angeordnete, pneumatisch oder hydraulisch betriebene Axialzylinder mit jeweils einem Zylinderraum, einem Zylinderkolben, der im Zylinderraum bewegbar ist, und einem mit dem Zylinderkolben verbundenen Zylinderstößel aufweist.

6. Hubpresse oder Hubstanze (1) gemäß Anspruch 4 oder 5, wobei der Zylinderraum des jeweiligen Axialzylinders in einer getriebegehäusefesten Hülse ausgeformt ist, und wobei z.B. die Hohlradanordnung (33) von der Hülse zumindest teilweise überlappend umgeben ist.

7. Hubpresse oder Hubstanze (1) gemäß einem der Ansprüche 4 bis 6, wobei sich der Hub des Stößels des jeweiligen Axialzylinders in die von der Antriebswelle (7) abgewandte und damit in die der Abtriebswelle (5) zugewandte Axialrichtung erstreckt.

8. Hubpresse oder Hubstanze (1) gemäß einem der vorangehenden Ansprüche, wobei die Bewegungseinrichtung (43) eine Stirnplatte aufweist, welche an einer Stirnseite der Hohlradanordnung (33) mit der Hohlradanordnung (33) verbunden ist und an welcher ein axial bewegbares Axialantriebsteil (45) der Bewegungseinrichtung (43) angebracht ist, sodass das jeweilige Hohlrad (35, 39) mit der Axialbewegung des Axialantriebsteils (45) axial mitbewegbar ist.

9. Hubpresse oder Hubstanze (1) gemäß Anspruch 8, wobei die Stirnplatte an der von der Eingangswelle (7) abgewandten und damit an der der Abtriebswelle (5) zugewandten Stirnseite der Hohlradanordnung (33) angebracht ist.

10. Hubpresse oder Hubstanze (1) gemäß einem der Ansprüche 4 bis 7 in Kombination mit Anspruch 8 oder 9, wobei das Axialantriebsteil (43) von dem Stößel gebildet wird.

## Claims

1. Lifting or stamping press (1) with a press frame (3), a drive shaft (7), an output shaft (5), a planetary gear (9) connected between the drive shaft (7) and the output shaft (5), and a ram (11) connected to the output shaft (5), where the planetary gear (9) has gear housing (19) that is fixed relative to the frame, a sun shaft (21) that is connected to the drive shaft (7), a planetary gear carrier (27) connected to the output shaft (5), and a ring gear arrangement (33), where the sun shaft (21) has a first and a second sun wheel (23, 25), which are connected to the sun shaft (21) for co-rotation, and where the planetary gear carrier (27) has a first planet wheel (29) that engages the first sun wheel (23) and a second planet wheel (31) that engages the second sun wheel (25), where the ring gear arrangement (33) has a first ring gear (35) and a second ring gear (39), which are mounted for co-rotation and axially movable on the gear housing (19), and where an axial movement device (43) is provided with which the first and the second ring gears (35, 39) can be moved in axial direction in order to cause the first ring gear (35) to engage the first planet wheel (29) selectively to achieve a first reduction ratio and the second ring gear (39) to engage the second planet wheel (31) selectively in order to achieve a second reduction ratio.

2. Lifting or stamping press (1) according to Claim 1, where the first ring gear (35) and the second ring gear (39) are formed together in one piece.

3. Lifting or stamping press (1) according to Claim 1 or 2, where the ring gear arrangement (33) has external toothing that engages internal toothing of the gear housing (19) in order to create a co-rotational connection to the gear housing (19).

4. Lifting or stamping press (1) according to one of the preceding claims, where the axial movement device (43) has a respective axial cylinder operated pneumatically or hydraulically with a cylinder barrel, a cylinder piston that can be moved inside the cylinder barrel, and a cylinder plunger connected to the cylinder piston in order to move the first and second ring gears (35, 39) in axial direction.

5. Lifting or stamping press (1) according to Claim 4, where the axial movement device (43) for moving the first and second ring gears (35, 39) in axial direction has several, for example at least three or four, pneumatically or hydraulically driven axial cylinders around the circumference of the ring gear arrangement (33) each with a cylinder barrel, a cylinder piston that can be moved inside the cylinder barrel, and a cylinder plunger connected to the cylinder piston.

6. Lifting or stamping press (1) according to Claim 4 or 5, where the cylinder barrel of the respective axial cylinder is shaped as a sleeve that is fixed relative to the gear housing and where the ring gear arrangement (33), for example, is surrounded by the sleeve with overlap, at least partly.

7. Lifting or stamping press (1) according to one of Claims 4 to 6, where the stroke of the plunger of the respective axial cylinder extends in the axial direction facing away from the drive shaft (7) and thus in the axial direction facing the output shaft (5).

8. Lifting or stamping press (1) according to one of the preceding claims, where the moving device (43) has an end plate, which is connected to the ring gear arrangement (33) on a face end of the ring gear arrangement (33) and on which an axially movable axial drive part (45) of the moving device (43) is mounted so that the respective ring gear (35, 39) can be moved in axial direction together with the axial movement of the axial drive part (45).

9. Lifting or stamping press (1) according to Claim 8, where the end plate is mounted on the face end of the ring gear arrangement (33) facing away from the input shaft (7) and thus facing the output shaft (5).

10. Lifting or stamping press (1) according to one of Claims 4 to 7 in combination with Claim 8 or 9, where the axial drive part (45) is formed by the plunger.

## Revendications

1. Presse de levage ou presse à estamper (1) comportant un cadre de presse (3), un arbre de transmission (7), un arbre de sortie (5), un engrenage planétaire (9), entreposé entre l'arbre de transmission (7) et l'arbre de sortie (5), et un piston-plongeur (11), lié à l'arbre de sortie (5), où l'engrenage planétaire (9) comporte un carter de boîte à vitesses (19) fixe par rapport au cadre de la presse, un arbre solaire (21), qui est lié à l'arbre de transmission (7), une cage de transmission planétaire (27) liée à l'arbre de sortie (5) et une disposition à roue à denture intérieure (33), où l'arbre solaire (21) comporte une première et une deuxième roues solaires (23, 25) qui sont liées à l'arbre solaire (21) de manière à assurer la rotation simultanée, et où la cage de transmission planétaire (27) comporte une première roue planétaire (29), qui est en prise avec la première roue solaire (23), et une deuxième roue planétaire (31), qui est en prise avec la deuxième roue solaire (25), où la disposition à roue à denture intérieure (33) comporte une première roue à denture intérieure (35) ainsi qu'une deuxième roue à denture intérieure (39), ces roues étant montées au carter de boîte à vitesses (19) de manière à assurer la rotation simultanée et amovibles axialement, et où un dispositif de mouvement axial (43) est prévu par lequel la première et la deuxième roues à denture intérieure (35, 39) sont amovibles axialement afin de mettre en prise sélectivement la première roue à denture intérieure (35) avec la première roue planétaire (29) pour obtenir un premier taux de réduction, et afin de mettre en prise sélectivement la deuxième roue à denture intérieure (39) avec la deuxième roue planétaire (31) pour obtenir un deuxième taux de réduction.

2. Presse de levage ou presse à estamper (1) selon la revendication 1, où la première roue à denture intérieure (35) et la deuxième roue à denture intérieure (39) sont formées ensemble en une pièce.

3. Presse de levage ou presse à estamper (1) selon l'une des revendications 1 ou 2, où la disposition à roue à denture intérieure (33) comporte une denture extérieure, qui est en prise avec une denture intérieure du carter de la boîte à vitesses (19) afin d'obtenir une connexion pour assurer la rotation simultanée avec le carter de la boîte à vitesses.

4. Presse de levage ou presse à estamper (1) selon l'une des revendications précédentes, où le dispositif de mouvement axial (43) pour mouvoir la première et la deuxième roues à denture intérieure (35, 39) axialement, comporte un vérin axial respectif à action pneumatique ou hydraulique en chaque cas, avec compartiment de vérin, piston de vérin amovible dans le compartiment de vérin et un coulisseau de vérin, qui est lié au piston de vérin.

5. Presse de levage ou presse à estamper (1) selon la revendication 4, où le dispositif de mouvement axial (43) pour mouvoir la première et la deuxième roues à denture intérieure (35, 39) axialement, comporte plusieurs vérins axiaux, par exemple au moins trois ou quatre vérins axiaux, disposés le long de la circonférence de la disposition à roue à denture intérieure (33) à action pneumatique ou hydraulique, chacun comportant un compartiment de vérin, un piston de vérin amovible dans le compartiment de vérin et un coulisseau de vérin, qui est lié au piston de vérin.

6. Presse de levage ou presse à estamper (1) selon l'une des revendications 4 ou 5, où le compartiment de vérin du vérin axial respectif est façonné comme un manchon fixe par rapport au carter de la boîte à vitesses et où, par exemple, la disposition à roue à denture intérieure (33) est entourée par le manchon la recouvrant au moins partiellement.

7. Presse de levage ou presse à estamper (1) selon l'une des revendications 4 à 6, où la course du coulisseau du vérin axial respectif s'étend au sens axial opposé à l'arbre de transmission (7) et donc au sens faisant face à l'arbre de sortie (5).

8. Presse de levage ou presse à estamper (1) selon l'une des revendications précédentes, où le dispositif de mouvement (43) comporte une plaque frontale qui est liée à la disposition à roue à denture intérieure (33) à une des faces frontales de la disposition à roue à denture intérieure (33) et à laquelle est fixé un élément de commande axiale (45), axialement amovible, du dispositif de mouvement (43) de façon à ce que la roue à denture intérieure (35, 39) respective soit amovible axialement ensemble avec le mouvement axial de l'élément de commande axiale (45).

9. Presse de levage ou presse à estamper (1) selon la revendication 8, où la plaque frontale est montée à la face frontale de la disposition à roue à denture intérieure (33) opposée à l'arbre de transmission (7), donc faisant face à l'arbre de sortie (5).

10. Presse de levage ou presse à estamper (1) selon l'une des revendications 4 à 7 en combinaison avec les revendications 8 ou 9, où l'élément de commande axiale (45) est formé par le coulisseau.
